# FASCICULE DE BREVET EUROPEEN

(11) **EP 0 672 440 B1**
(45) Date de publication et mention de la délivrance du brevet: **24.06.1998**
(21) Numéro de dépôt: 95400515.3
(22) Date de dépôt: 10.03.1995
(51) Int. Cl.: B01D 24/38

(54) **Filtre pour l'épuration des eaux**
Filter zur Reinigung von Wasser
Filter for cleaning water

(30) Priorité: 14.03.1994 FR 9402952
(43) Date de publication de la demande: 20.09.1995
(73) Titulaire: EPARCO, F-75009 Paris (FR)
(72) Inventeur: Philip, Hervé, F-34570 Pignan (FR); Maunoir, Siegfried, F-34000 Montpellier (FR)
(74) Mandataire: Derambure, Christian

(56) Documents cités:
- DE-C- 191 587
- FR-A- 352 288
- FR-A- 1 117 456
- FR-A- 1 275 586
- US-A- 2 233 981

## Description

L'invention concerne un filtre pour l'épuration des eaux, notamment les eaux usées domestiques après prétraitement préalable dans une fosse septique avant leur rejet dans le milieu naturel, un système de traitement des eaux comportant un tel filtre, ainsi qu'une fosse septique comportant un tel filtre.

On connaît déjà des filtres pour l'épuration des eaux qui comportent une entrée pour les eaux à traiter, une sortie pour les eaux traitées et des moyens de filtration interposés entre l'entrée et la sortie. Ces moyens de filtration sont en général sous la forme de tuyaux destinés à répartir les eaux dans une couche de sable ayant une fonction de filtrage.

Cet état de la technique est notamment défini par les documents FR-A-352 288, FR-A-1 117 456, FR-A-1 275 586, US-A-2 233 981, DE-C-191 587.

On sait également que l'épandage peut se faire directement dans un sol naturel.

Cependant, la première caractéristique exigée pour un bon filtre épurateur est d'obtenir un bon compromis entre la qualité de répartition des eaux et la qualité de l'épuration à savoir une bonne aération du filtre. Dans les filtres connus, cette caractéristique est obtenue au détriment de la surface utilisée par le filtre qui est importante. En effet, pour un épandage par sol naturel, il est nécessaire d'utiliser une surface d'environ 10 m² pour 150 l de charge d'eau, et pour un filtre comportant une couche de sable la surface est ramenée à 3 m², ce qui est encore trop important.

L'invention vise donc à pallier cet inconvénient. Elle a pour objet un filtre pour l'épuration des eaux qui permette d'obtenir un bon rendement c'est-à-dire une bonne répartition et une bonne épuration des eaux tout en ayant une surface réduite.

A cet effet, l'invention propose un filtre pour l'épuration des eaux du type comportant :
- une entrée pour les eaux à traiter
- une sortie pour les eaux traitées
- des moyens de filtration interposés entre l'entrée et la sortie
- deux réseaux de tuyaux respectivement de répartition et de drainage associés respectivement à l'entrée et à la sortie, placés sensiblement en regard et espacés l'un de l'autre, et pourvus de perforations réparties longitudinalement dans leurs parois transversales,
- Des moyens filtrants interposés entre les deux réseaux, caractérisé en ce que le réseau de tuyaux de répartition est adjacent à une première surface des moyens filtrants, et en ce que les moyens de filtration comportent des moyens de répartition associés au réseau de tuyaux de répartition et destinés à assurer une diffusion des eaux à traiter vers les moyens filtrants.

Elle propose en outre un système de traitement des eaux comportant un système d'alimentation discontinue pouvant être constitué par un bac comportant, associé à l'entrée d'un filtre selon l'invention, soit un siphon amorçable par une cloche à pression, soit un auget basculant, soit une pompe électrique avec détecteur de niveau haut et bas.

L'alimentation du filtre en eau ne se fait plus en continu mais par paquet et cela permet donc une répartition des eaux encore meilleure.

Enfin, l'invention propose une fosse septique comportant un système de prétraitement associé au système de traitement précité.

Les autres caractéristiques de l'invention résulteront de la description qui suivra en référence aux dessins annexés dans lesquels :
- la figure 1 est une vue de dessus d'un filtre selon l'invention ;
- la figure 2 est une vue de dessous du filtre représenté sur la figure 1 ;
- la figure 3 est une vue en coupe du filtre, suivant la ligne A-A' des figures 1 et 2 ;
- la figure 4 est une représentation en perspective d'un tuyau de répartition du réseau de tuyau de répartition d'un filtre selon l'invention ; et
- la figure 5 est une vue partielle en coupe d'un tuyau de répartition muni d'un moyen de protection et auquel sont associés des moyens de répartition.

L'invention concerne un filtre 1 pour l'épuration des eaux, notamment des eaux usées domestiques, qui comporte une entrée 2 pour les eaux à traiter, une sortie 3 des eaux traitées et des moyens de filtration interposés entre l'entrée 2 et la sortie 3.

Le filtre 1 est alimenté en eaux à traiter, au niveau de son entrée 2, par l'intermédiaire d'un siphon 4 amorçable par une cloche à pression situé dans un bac d'alimentation 4a. Le siphon 4 reçoit les eaux à traiter d'un système de prétraitement non représenté constitué par exemple par une fosse septique.

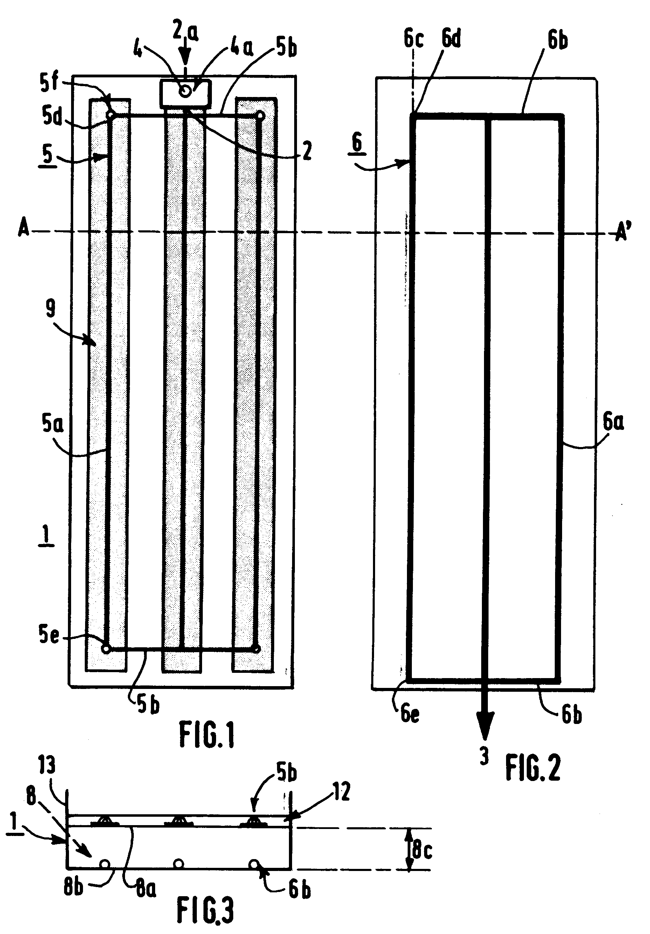

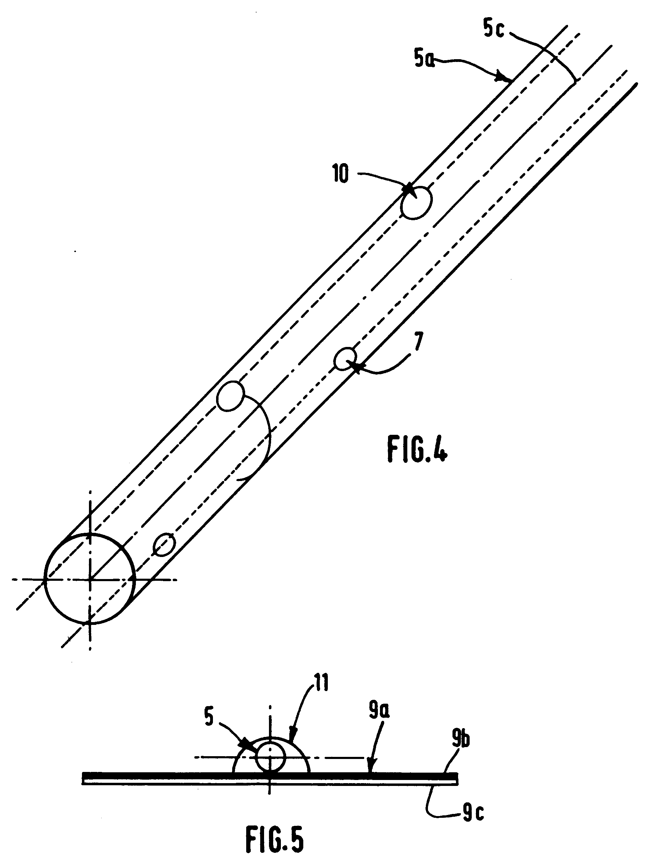

Dans l'exemple de réalisation considéré sur la figure 1, le siphon 4 amorçable placé dans le bac d'alimentation 4a est contenu dans le filtre 1. Le filtre 1 peut cependant être distinct du siphon 4. L'entrée du filtre correspond donc ici à l'entrée 2a du siphon 4 situé dans le bac d'alimentation 4a, ce siphon 4 alimentant alors l'entrée 2 du filtre 1.

L'invention concerne également un système de traitement des eaux comportant un système d'alimentation discontinue tel qu'un bac 4a dans lequel est situé le siphon 4 amorçable par une cloche à pression situé également dans le filtre 1 dont l'entrée 2 est alimentée par le siphon 4.

Ce siphon 4 amorçable provoque une alimentation par paquet du filtre 1 en eaux à traiter. L'alimentation n'étant plus continue, on peut régler l'amorçage du siphon 4 de telle sorte que le filtre ne reçoit un paquet d'eaux à traiter que lorsque le précédent l'a bien été. Cela permet d'obtenir une meilleure répartition des eaux dans le filtre ainsi qu'une meilleure épuration.

Suivant d'autres modes de réalisation, on peut prévoir de remplacer le siphon 4 par un auget basculant ou une pompe électrique avec détecteur de niveau haut et bas.

Dans le système de traitement considéré, le filtre 1 est placé sensiblement horizontalement et à la surface du sol. Il peut cependant être partiellement enterré ou totalement enterré.

Selon l'invention, les moyens de filtration du filtre 1 comportent :
- deux réseaux de tuyaux 5, 6 respectivement de répartition et de drainage associés respectivement à l'entrée 2 et à la sortie 3 placés sensiblement en regard et espacés l'un de l'autre, et pourvus de perforations 7 réparties longitudinalement dans leurs parois transversales ;
- des moyens filtrants 8 interposés entre les deux réseaux 5 et 6 et
- des moyens de répartition 9 associés au réseau de tuyaux de répartition 5 et destinés à assurér une diffusion des eaux à traiter vers les moyens filtrants 8.

Les moyens filtrants 8 se présentent sous la forme d'une couche granulaire filtrante. Cette couche granulaire filtrante 8 est en un matériau à dominante siliceuse et comprend plus particulièrement des granulats de zéolite, présentant une granulométrie comprise entre 0,1 et 10 mm environ. L'épaisseur de la couche 8 est comprise entre 0,5 et 1 m, elle est de préférence de 60 cm. Cette couche comprend par exemple soit entièrement des granulats entre 2 et 5 mm, soit 2 sous-couches, une supérieure de 2 à 5 mm et une inférieure de 0,2 à 2 mm. Les granulats de zéolite permettent, grâce à la présence d'interstices intergranulaires, une excellente circulation de l'air et donc une bonne croissance des microorganismes épurateurs. La zéolite fixe de plus bien la biomasse épuratrice et permet ainsi un bon rendement d'élimination de la charge polluante carbonnée des effluents.

D'autre part, la zéolite est constituée de grains microporeux qui permettent un écoulement de l'eau gravitaire entre les grains en cas de fort débit, et par capilarité d'un grain à l'autre en cas de faible débit.

Enfin, la zéolite possède des propriétés intéressantes d'élimination de la pollution azotée.

Selon l'invention, le réseau de tuyaux de répartition 5 est adjacent à une première surface 8a de la couche granulaire filtrante 8. Il peut être situé à l'extérieur ou à l'intérieur de cette couche granulaire filtrante 8.

Dans l'exemple de réalisation considérée sur la figure 3, le réseau de tuyaux de répartition 5 est placé à l'extérieur de la couche granulaire filtrante 8.

D'autre part, ce réseau de tuyaux de répartition 5 est muni de cheminées permettant son aération.

De même, le réseau de tuyaux de drainage 6 est adjacent à une seconde surface 8b de la couche granulaire filtrante 8. Il peut également être situé à l'extérieur ou dans la couche granulaire filtrante 8. Dans l'exemple de réalisation considéré sur la figure 3, le réseau de tuyaux de drainage 6 est placé dans la couche granulaire filtrante 8.

Le réseau de tuyaux de répartition 5 comporte au moins une nappe de plusieurs tuyaux de répartition 5a espacés transversalement les uns par rapport aux autres et en communication les uns avec les autres notamment au voisinage de l'entrée 2 du filtre 1.

D'après la forme de réalisation représentée sur la figure 1, les tuyaux de répartition 5a sont en communication les uns avec les autres par l'intermédiaire de tuyaux de communication 5b placés transversalement par rapport à l'axe longitudinal 5c des tuyaux de répartition 5a au niveau de leurs extrémités 5d, 5e. Les tuyaux de répartition 5a sont de préférence en PVC et ont un diamètre de 40 mm environ.

La distance d qui sépare les axes longitudinaux 5c de tuyaux de répartition 5a est, de préférence, de 1 m environ.

Le réseau de tuyaux de drainage 6 comporte au moins une nappe de plusieurs tuyaux de drainage 6b espacés transversalement les uns par rapport aux autres et en communication les uns avec les autres au voisinage de la sortie 3 du filtre 1.

Dans l'exemple de réalisation considéré (figure 2), le réseau de tuyaux de drainage 6 a la même configuration que le réseau de tuyaux de répartition 5. Les tuyaux de drainage 6a sont donc en communication les uns avec les autres par l'intermédiaire de tuyaux de communication 6c placés aux extrémités 6d, 6e des tuyaux de drainage 6a transversalement par rapport à l'axe longitudinal 6d des tuyaux de drainage 6a. Les tuyaux de communication 6b situés à l'extrémité 6e des tuyaux de drainage 6a sont en communication avec la sortie 3 du filtre 1.

Les tuyaux de drainage 6a sont également de préférence en PVC et ont un diamètre de 100 mm environ.

La distance d qui sépare les axes 6b des tuyaux de drainage 6a est ici la même que dans le cas du réseau de tuyaux de répartition 5.

Les moyens de répartition 9 associés au réseau de tuyaux de répartition 5 se présentent sous la forme d'une nappe d'absorption et de diffusion des eaux interposée entre le réseau de tuyaux de répartition 5 et les moyens filtrants 8, à savoir la couche granulaire filtrante 8.

Dans une forme de réalisation préférée de l'invention, les moyens de répartition 9 se présentent sous la forme de bandes 9a d'absorption et de diffusion des eaux, de préférence d'environ 50 cm de largeur, ces bandes 9a étant interposées entre le réseau de tuyaux de répartition 5 et les moyens filtrants 8.

Cette nappe ou ces bandes 9a d'absorption et de diffusion comprennent un géotextile d'un grammage de 750 g/m² environ et peuvent se présenter, dans le sens de diffusion des eaux, sous la forme d'une couche drainante 9b et d'une couche filtrante fine 9c de préférence en polypropylène.

Ainsi, du fait de la croissance des microorganismes épurateurs, le géotextile perd progressivement une partie de sa perméabilité et diffuse les eaux à traiter progressivement vers la couche granulaire filtrante 8, entrainant une amélioration de la répartition de l'eau en surface. Dans le cas de l'utilisation des bandes 9a d'absorption et de diffusion et dans l'exemple de réalisation considéré, les tuyaux de répartition 5a sont placés dans la partie médiane des bandes 9a d'absorption et de diffusion.

Selon l'invention, les tuyaux de répartition 5b sont pourvus de perforations 7 réparties longitudinalement dans leurs parois transversales et disposées sensiblement perpendiculairement à l'épaisseur 8c de la couche granulaire filtrante 8.

D'après la figure 4, les perforations 7 sont de forme cylindrique et ont un diamètre d'au moins 8 mm afin de ne pas risquer d'être bouchées.

Ces perforations 7 sont réparties longitudinalement avec un intervalle d'environ 30 cm ce qui permet une bonne répartition des eaux en utilisant la totalité des perforations 7 présentes dans les tuyaux de répartition 5a.

Pour maintenir une bonne répartition des eaux en cas de fort débit, les tuyaux de répartition 5a sont également pourvus d'orifices de trop plein 10 répartis également longitudinalement mais à l'opposé de la première surface 8a de la couche granulaire filtrante 8. Ces orifices de trop plein 10 ont de préférence un diamètre de 10 mm environ et sont placés en alternance avec les perforations 7.

En cas de fort débit d'entrée, le passage de l'eau excédentaire s'effectue ainsi par ces orifices de trop plein 10. La totalité de la surface du filtre 1 est donc utilisée quelque soit le débit d'entrée.

Selon une forme de réalisation préférée du filtre 1 selon l'invention, représenté sur la figure 5, les tuyaux de répartition 5a sont recouverts respectivement d'un moyen de protection 11 destiné à éviter l'obstruction des perforations 7 ou des orifices de trop plein 10. Ce moyen de protection 11 se présente sous la forme d'une gouttière retournée d'un diamètre supérieur à celui du tuyaux de répartition 5a n'empêchant pas ainsi le bon fonctionnement des perforations 7 et des orifices de trop plein 10.

Dans la forme de réalisation représentée sur la figure 5, les gouttières retournées 11 ont une diamètre de 100 mm environ.

Pour protéger la couche granulaire filtrante 8, on peut prévoir une couche de protection 12 dans laquelle se trouve le réseau de tuyaux de répartition 5. Cette couche de protection 5 est adjacente à la couche granulaire filtrante 8 au niveau de sa première surface 8a et est de préférence une couche en gravier lavé, d'une épaisseur de 5 à 10 cm environ.

Enfin, le filtre 1 comporte un carter extérieur 13 dans lequel sont logés les deux réseaux de tuyaux respectivement de répartition 5 et de drainage 6, les moyens filtrants 8 interposés entre les deux réseaux 5 et 6 et les moyens de répartition 9 associés au réseau de tuyau de répartition 5, ce carter comportant l'entrée 2 et la sortie 3.

Dans l'exemple de réalisation représenté sur la figure 2, le carter 13 a une forme de U mais il peut également avoir une forme de U dont l'ouverture est fermée.

En outre, selon une autre réalisation, ce carter 13 peut être remplacé par un bac en béton à parois étanches réalisé sur place.

## Revendications

1. Filtre (1) pour l'épuration des eaux du type comportant :
- une entrée (2) pour les eaux à traiter
- une sortie (3) pour les eaux traitées
- des moyens de filtration interposés entre l'entrée et la sortie
comportant
- deux réseaux (5, 6) de tuyaux respectivement de répartition et de drainage associés respectivement a l'entrée (2) et a la sortie (3), placés sensiblement en regard et espacés l'un de l'autre, et pourvus de perforations (7) réparties longitudinalement dans leurs parois transversales,
- des moyens filtrants (8) interposés entre les deux réseaux (5, 6), caractérisé en ce que le réseau (5) de tuyaux de répartition est adjacent à une première surface (8a) des moyens filtrants (8) et en ce que les moyens de filtration comportent des moyens de répartition (9) associés au réseau (5) de tuyaux de répartition (5a) et destinés à assurer une diffusion des eaux a traiter vers les moyens filtrants (8).

2. Filtre selon la revendication 1, caractérisé par le fait que les moyens filtrants (8) se présentent sous la forme d'au moins une couche granulaire filtrante.

3. Filtre selon la revendication 1 ou 2, caractérisé par le fait que le réseau (5) de tuyaux de répartition est placé a l'extérieur de la couche granulaire filtrante (8).

4. Filtre selon l'une quelconque des revendications 1 à 3, caractérisé par le fait que le réseau (6) de tuyaux de drainage est adjacent a une seconde surface (8b) de la couche granulaire filtrante (8).

5. Filtre selon l'une quelconque des revendications 2 à 4, caractérisé par le fait que le réseau (6) de tuyaux de drainage est placé dans la couche granulaire filtrante (8).

6. Filtre selon l'une quelconque des revendications 1 à 5 caractérisé par le fait qu'il comporte en outre une couche de protection (12) dans laquelle se trouve le réseau (5) de tuyaux de répartition et qui est adjacente a la couche granulaire filtrante (8).

7. Filtre selon la revendication 6, caractérisé par le fait que la seconde couche de protection est une couche de gravier lavée.

8. Filtre selon l'une quelconque des revendications 1 à 7, caractérisé par le fait que le réseau (5) de tuyaux de répartition comporte au moins une nappe de plusieurs tuyaux (5a) espacés transversalement les uns par rapport aux autres et en communication les uns avec les autres notamment au voisinage de l'entrée (2).

9. Filtre selon l'une quelconque des revendications 2 à 8, caractérisé par le fait que les perforations (7) du réseau (5) de tuyaux de répartition sont disposées sensiblement perpendiculairement a l'épaisseur (8c) de la couche granulaire filtrante (8).

10. Filtre selon l'une quelconque des revendications 2 à 9 caractérisé par le fait que les tuyaux de répartition (5a) sont en outre pourvus d'orifices de trop plein (10) répartis longitudinalement, à l'opposé de la première surface (8a) de la couche granulaire filtrante (8).

11. Filtre selon l'une quelconque des revendications 1 à 10, caractérisé par le fait que les tuyaux de répartition (5a) sont recouverts respectivement d'un moyen de protection (11) destiné a éviter l'obstruction des perforations (7) et/ou des orifices de trop plein (10) sans empêcher la répartition des eaux.

12. Filtre selon la revendication 11, caractérisé par le fait que le moyen de protection (11) est une gouttière retournée.

13. Filtre selon l'une quelconque des revendications 1 à 12, caractérisé par le fait que les moyens de répartition (9) se présentent sous la forme d'une nappe d'absorption et de diffusion des eaux interposée entre le réseau (5) de tuyaux de répartition et les moyens filtrants (8).

14. Filtre selon l'une quelconque des revendications 1 à 12, caractérisé par le fait que les moyens de répartition (9) se présentent sous la forme de bandes (9a) d'absorption et de diffusion de l'eau interposées entre le réseau (5a) de tuyaux de répartition et les moyens filtrants (8).

15. Filtre selon la revendication 14, caractérisé par le fait que les bandes (9a) d'absorption et de diffusion de l'eau se présentent dans le sens de la diffusion de l'eau sous la forme succéssivement d'une couche drainante (9b) et d'une couche filtrante fine (9c).

16. Filtre selon la revendication 14 ou 15, caractérisé par le fait que les tuyaux de répartition (5a) sont placés dans la partie médiane des bandes (9a) d'absorption et de diffusion.

17. Filtre selon l'une quelconque des revendications 2 à 16 caractérisé par le fait que la couche granulaire filtrante comprend des granulats entre 2 et 5 mm.

18. Filtre selon l'une quelconque des revendications 2 à 16 caractérisé par le fait que la couche granulaire comprend deux sous-couches, une supérieure de 2 à 5 mm et une inférieure de 0,2 à 2 mm.

19. Filtre selon l'une quelconque des revendications 2 à 16, caractérisé par le fait que la couche granulaire filtrante (8) comprend des granulats de zéolite, présentant une granulométrie comprise entre 0,1 et 10 mm environ.

20. Filtre selon l'une quelconque des revendications 1 à 17, caractérisé par le fait que le réseau (6) de tuyaux de drainage comporte au moins une nappe de plusieurs tuyaux (6a) espacés transversalement les uns par rapport aux autres et en communication les uns avec les autres notamment au voisinage de la sortie (3).

21. Filtre selon l'une quelconque des revendications 1 à 18, caractérisé en ce qu'il comporte en outre un carter extérieur (13) dans lequel sont logés les deux réseaux (5, 6) de tuyaux respectivement de répartition et de drainage, les moyens filtrants (8) interposés entre les deux réseaux (5, 6) et les moyens de répartition (7) associés au réseau de répartition (5), ce carter (13) comportant une entrée (2) et une sortie (3).

22. Filtre selon la revendication 19, caractérisé par le fait que le carter (13) a une forme en U.

23. Filtre selon la revendication 19, caractérisé par le fait que le carter (13) a une forme de U dont l'ouverture est fermée.

24. Filtre selon l'une quelconque des revendications 1 à 21, caractérisé par le fait qu'il comporte en outre un siphon (4) amorçable par une cloche a pression, associé à l'entrée (2) du filtre (1) et situé dans un bac d'alimentation (4a).

25. Système de traitement des eaux comportant un système d'alimentation discontinu comprenant un bac d'alimentation (4a) dans lequel est situé un siphon (4) amorçable par une cloche a pression qui est associé a l'entrée (2) d'un filtre (1) selon l'une des revendications 1 à 21.

26. Système de traitement des eaux comportant un système d'alimentation discontinu comprenant un bac d'alimentation (4a) dans lequel est situé un auget basculant qui est associé à l'entrée (2) d'un filtre (1) selon l'une des revendications 1 à 21.

27. Système de traitement des eaux comportant un système d'alimentation discontinu comprenant un bac d'alimentation (4a) dans lequel est situé une pompe électrique avec détecteur de niveau haut et bas qui est associée a l'entrée (2) d'un filtre (1) selon l'une des revendications 1 à 21.

28. Système de traitement des eaux dans lequel il est prévu un filtre (1) selon la revendication 22.

29. Système selon l'une des revendication 23 à 26, caractérisé par le fait que le filtre (1) est placé substantiellement horizontalement.

30. Système selon la revendication 27, caractérisé par le fait que le filtre (1) est partiellement enterré.

31. Système selon la revendication 27, caractérisé par le fait que le filtre (1) est totalement enterré.

32. Fosse septique comportant un système de prétraitement relié à un système de traitement selon l'une des revendications 23 à 29.

## Claims

1. A water purification filter (1) of the type comprising:
- an inlet (2) for water to be treated
- an outlet (3) for treated water
- filtering means inserted between the inlet and the outlet, including:
- two pipe networks (5, 6), for distribution and draining, respectively, associated with the inlet (2) and with the outlet (3), respectively, placed substantially opposite to and spaced from one another, and provided with perforations (7) distributed longitudinally in their transverse walls,
- filtering means (8) inserted between the two networks (5, 6), characterised in that the distribution pipe network (5) is adjacent to a first surface (8a) of the filtering means (8) and in that the filtering means comprise distribution means (9) associated with the distribution pipe (5a) network (5) and intended to ensure the diffusion of the water to be treated towards the filtering means (8).

2. A filter according to claim 1, characterised by the fact that the filtering means (8) consist of at least one granular filtering layer.

3. A filter according to claim 1 or 2, characterised by the fact that the distribution pipe network (5) is placed outside the granular filtering layer (8).

4. A filter according to any of claims 1 to 3, characterised by the fact that the drain pipe network (6) is adjacent to a second surface (8b) of the granular filtering layer (8).

5. A filter according to any of claims 2 to 4, characterised by the fact that the drain pipe network (6) is placed inside the granular filtering layer (8).

6. A filter according to any of claims 1 to 5, characterised by the fact that it further includes a protective layer (12) in which the distribution pipe network (5) is located and which is adjacent to the granular filtering layer (8).

7. A filter according to claim 6, characterised by the fact that the second protective layer (12) is a washed gravel layer.

8. A filter according to any of claims 1 to 7, characterised by the fact that the distribution pipe network (5) includes at least one ply of several pipes (5a) spaced transversely with respect to one another and connected together, particularly in the vicinity of the inlet (2).

9. A filter according to any of claims 2 to 8, characterised by the fact that the perforations (7) in the distribution pipe network (5) are arranged substantially perpendicular to the thickness (8c) of the granular filtering layer (8).

10. A filter according to any of claims 2 to 9, characterised by the fact that the distribution pipes (5a) are further provided with overflow orifices (10) distributed longitudinally, opposite to the first surface (8a) of the granular filtering layer (8).

11. A filter according to any of claims 1 to 10, characterised by the fact that the distribution pipes (5a) are respectively covered with a protective means (11) intended to prevent the obstruction of the perforations (7) and/or overflow orifices (10) without impeding the distribution of water.

12. A filter according to claim 11, characterised by the fact that the protective means (11) is an upsidedown gutter.

13. A filter according to any of claims 1 to 12, characterised by the fact that the distribution means (9) consist of a water absorption and distribution ply inserted between the distribution pipe network (5) and the filtering means (8).

14. A filter according to any of claims 1 to 12, characterised by the fact that the distribution means (9) consist of water absorption and diffusion strips (9a) inserted between the distribution pipe network (5a) and the filtering means (8).

15. A filter according to claim 14, characterised by the fact that the water absorption and diffusion strips (9a) are arranged in the direction of the diffusion of the water and successively consist of a draining layer (9b) and a thin filtering layer (9c).

16. A filter according to claim 14 or 15, characterised by the fact that the distribution pipes (5a) are placed in the middle part of the absorption and diffusion strips (9a).

17. A filter according to any of claims 2 to 16, characterised by the fact that the granular filtering layer comprises granules of between 2 and 5 mm.

18. A filter according to any of claims 2 to 16, characterised by the fact that the granular layer comprises two sublayers; a 2 to 5 mm upper sublayer and a 0.2 to 2 mm lower sublayer.

19. A filter according to any of claims 2 to 16, characterised by the fact that the granular filtering layer (8) comprises zeolite granules with a size grading of between approximately 0.1 and 10 mm.

20. A filter according to any of claims 1 to 17, characterised by the fact that the drain pipe network (6) includes at least one ply of several pipes (6a) spaced transverzely with respect to one another and connected together, particularly in the vicinity of the outlet (3).

21. A filter according to any of claims 1 to 18, characterised in that it further includes an outer casing (13) which accommodates the two pipe networks (5, 6), for distribution and draining, respectively, the filtering means (8) inserted between the two networks (5, 6) and the distribution means (7) associated with the distribution network (5), this casing (13) including an inlet (2) and an outlet (3).

22. A filter according to claim 19, characterised by the fact that the casing (13) is U-shaped.

23. A filter according to claim 19, characterised by the fact that the casing (13) is U-shaped with its opening sealed.

24. A filter according to any of claims 1 to 21, characterised by the fact that it further includes a siphon (4) activated by a pressure bell, associated with the inlet (2) of a filter (1) and located within a supply tank (4a).

25. A water treatment system including a discontinuous supply system comprising a supply tank (4a) which contains a siphon (4) activated by a pressure bell and associated with the inlet (2) of a filter (1) according to one of claims 1 to 21.

26. A water treatment system including a discontinuous supply system comprising a supply tank (4a) which contains a swing pan associated with the inlet (2) of a filter (1) according to one of claims 1 to 21.

27. A water treatment system including a discontinuous supply system comprising a supply tank (4a) which contains an electric pump with a high and low-level detector that is associated with the inlet (2) of a filter (1) according to one of claims 1 to 21.

28. A water treatment system in which a filter (1) according to claim 22 is provided.

29. A system according to one of claims 23 to 26, characterised by the fact that the filter (1) is placed substantially horizontally.

30. A system according to claim 27, characterized by the fact that the filter (1) is partially burried.

31. A system according to claim 27, characterised by the fact that the filter (1) is completely burried.

32. A septic tank including a pre-treatment system connected to a treatment system according to one of claims 23 to 29.

## Patentansprüche

1. Filter (1) für die Wasseraufbereitung eines Typs mit:
- einem Einlass (2) für das aufzubereitende Wasser
- einem Auslass (3) für das aufbereitete Wasser
- zwischen dem Einlass und dem Auslass angeordneten Filtermitteln
mit
- zwei Rohrnetzen (5, 6), jeweils zu Verteilung und zur Drainage, die jeweils dem Einlass (2) und dem Auslass (3) zugeordnet und jeweils etwa gegenüberliegend mit einem Zwischenraum zueinander angeordnet sind, und die in Längsrichtung in ihren Querwänden verteilte Löcher (7) aufweisen,
- Filtermitteln (8) zwischen den beiden Netzen (5, 6), dadurch gekennzeichnet, dass das Verteilungsrohrnetz (5) an eine erste Oberfläche (8a) der Filtermittel (8) angrenzt, und dass die Filtermittel dem Netz (5) der Verteilungsrohre (5a) zugeordnete Verteilungsmittel (9) aufweisen, die dazu bestimmt sind, eine Verteilung des aufzubereitenden Wassers zu den Filtermitteln (8) zu gewährleisten.

2. Filter nach Anspruch 1, dadurch gekennzeichnet, dass die Filtermittel (8) aus zumindest einer filternden Kornschicht bestehen.

3. Filter nach Anspruch 1 oder 2, dadurch gekennzeichnet, dass das Netz (5) der Verteilungsrohre ausserhalb der filternden Kornschicht (8) angeordnet ist.

4. Filter nach einem der Ansprüche 1 bis 3, dadurch gekennzeichnet, dass das Netz (6) der Drainagerohre an eine zweite Oberfläche (8b) der filternden Kornschicht (8) angrenzt.

5. Filter nach einem der Ansprüche 2 bis 4, dadurch gekennzeichnet, dass das Netz (6) der Drainagerohre in der filternden Kornschicht (8) angeordnet ist.

6. Filter nach einem der Ansprüche 1 bis 5, dadurch gekennzeichnet, dass er weiters eine Schutzschicht (12) aufweist, in der sich das Netz (5) der Verteilerrohre befindet, und die an die filternde Kornschicht (8) angrenzt.

7. Filter nach Anspruch 6, dadurch gekennzeichnet, dass die zweite Schutzschicht aus Waschkies besteht.

8. Filter nach einem der Ansprüche 1 bis 7, dadurch gekennzeichnet, dass das Netz (5) der Verteilungsrohre mindestens eine aus mehreren Rohren (5a) bestehende Decke umfasst, wobei die Rohre in Querrichtung mit einem Zwischenraum angeordnet und miteinander verbunden sind, insbesondere in der Nähe des Einlasses (2).

9. Filter nach einem der Ansprüche 2 bis 8, dadurch gekennzeichnet, dass die Löcher (7) des Netzes (5) der Verteilungsrohre etwa lotrecht zur Dicke (8c) der filternden Kornschicht (8) angeordnet sind.

10. Filter nach einem der Ansprüche 2 bis 9, dadurch gekennzeichnet, dass die Verteilungsrohre (5a) weiters Überlauföffnungen (10) aufweisen, die in Längsrichtung gegenüber der ersten Oberfläche (8a) der filternden Kornschicht (8) verteilt sind.

11. Filter nach einem der Ansprüche 1 bis 10, dadurch gekennzeichnet, dass die Verteilungsrohre (5a) jeweils mit einem Schutzmittel (11) abgedeckt sind, um das Verstopfen der Löcher (7) und/oder der Überlauföffnungen (10) zu vermeiden, ohne die Wasserverteilung zu behindern.

12. Filter nach Anspruch 11, dadurch gekennzeichnet, dass das Schutzmittel (11) eine umgedrehte Dachrinne ist.

13. Filter nach einem der Ansprüche 1 bis 12, dadurch gekennzeichnet, dass die Verteilungsmittel (9) die Form einer Absorptions- und Verteilungsdecke des Wassers aufweist, die zwischen dem Netz (5) der Verteilungsrohre und den Filtermitteln (8) angeordnet ist.

14. Filter nach einem der Ansprüche 1 bis 12, dadurch gekennzeichnet, dass die Verteilungsmittel (9) die Form von Absorptions- und Verteilungsstreifen (9a) des Wassers aufweist, die zwischen dem Netz (5a) der Verteilungsrohre und den Filtermitteln (8) angeordnet sind.

15. Filter nach Anspruch 14, dadurch gekennzeichnet, dass die Absorptions- und Verteilungsstreifen (9a) des Wassers in Richtung der Wasserverteilung verlaufen, und zwar in Form einer Drainageschicht (9b) gefolgt von einer feinen Filterschicht (9c).

16. Filter nach Anspruch 14 oder 15, dadurch gekennzeichnet, dass die Verteilungsrohre (5a) im mittleren Teil der Absorptions- und Verteilungsstreifen (9a) angeordnet sind.

17. Filter nach einem der Ansprüche 2 bis 16, dadurch gekennzeichnet, dass die filternde Kornschicht Granulate zwischen 2 und 5 mm umfasst.

18. Filter nach einem der Ansprüche 2 bis 16, dadurch gekennzeichnet, dass die Kornschicht zwei Unterschichten umfasst, eine obere von 2 bis 5 mm und eine untere von 0,2 bis 2 mm.

19. Filter nach einem der Ansprüche 2 bis 16, dadurch gekennzeichnet, dass die filternde Kornschicht (8) Zeolit-Granulate umfasst, die eine Granulometrie zwischen etwa 0,1 und 10 mm aufweisen.

20. Filter nach einem der Ansprüche 1 bis 17, dadurch gekennzeichnet, dass das Netz (6) der Drainagerohre mindestens eine aus mehreren Rohren (6a) bestehende Decke umfasst, wobei die Rohre in Querrichtung mit einem Zwischenraum angeordnet und miteinander verbunden sind, insbesondere in der Nähe des Auslasses (3).

21. Filter nach einem der Ansprüche 1 bis 18, dadurch gekennzeichnet, dass er weiters ein Aussengehäuse (13) umfasst, in dem die beiden Netze (5, 6) der Verteilungs- und Drainagerohre, die zwischen den beiden Netzen (5, 6) angeordneten Filtermittel (8) und die dem Verteilungsnetz (5) zugeordneten Verteilungsmittel (7) untergebracht sind, wobei dieses Gehäuse (13) einen Einlass (2) und einen Auslass (3) aufweist.

22. Filter nach Anspruch 19, dadurch gekennzeichnet, dass das Gehäuse (13) U-förmig ist.

23. Filter nach Anspruch 19, dadurch gekennzeichnet, dass das Gehäuse (13) U-förmig mit geschlossener Öffnung ist.

24. Filter nach einem der Ansprüche 1 bis 21, dadurch gekennzeichnet, dass er weiters einen mit einer Druckglocke ansaugbaren Düker (4) aufweist, der dem Einlass (2) des Filters (1) zugeordnet und in einem Versorgungsbehälter (4a) angeordnet ist.

25. Wasseraufbereitungssystem mit einem diskontinuierlichen Versorgungssystem, bestehend aus einem Versorgungsbehälter (4a), in dem ein von einer Druckglocke ansaugbarer und dem Einlass (2) eines Filters (1) nach einem der Ansprüche 1 bis 21 zugeordneter Düker (4) angeordnet ist.

26. Wasseraufbereitungssystem mit einem diskontinuierlichen Versorgungssystem, bestehend aus einem Versorgungsbehälter (4a), in dem eine dem Einlass (2) eines Filters (1) nach einem der Ansprüche 1 bis 21 zugeordnete Kippmulde angeordnet ist.

27. Wasseraufbereitungssystem mit einem diskontinuierlichen Versorgungssystem, bestehend aus einem Versorgungsbehälter (4a), in dem eine dem Einlass (2) eines Filters (1) nach einem der Ansprüche 1 bis 21 zugeordnete Elektropumpe mit Detektor des oberen und unteren Füllstands angeordnet ist.

28. Wasseraufbereitungssystem, in dem ein Filter (1) nach Anspruch 22 vorgesehen ist.

29. System nach einem der Ansprüche 23 bis 26, dadurch gekennzeichnet, dass der Filter (1) im wesentlichen waagerecht angeordnet ist.

30. System nach Anspruch 27, dadurch gekennzeichnet, dass der Filter (1) teilweise eingegraben ist.

31. System nach Anspruch 27, dadurch gekennzeichnet, dass der Filter (1) völlig eingegraben ist.

32. Klärgrube mit einem an einem Aufbereitungssystem nach einem der Ansprüche 23 bis 29 angeschlossenen Voraufbereitungssystem.
